# FASCICULE DE BREVET EUROPEEN

(11) **EP 1 397 235 B1**
(45) Date de publication et mention de la délivrance du brevet: **02.01.2008**
(21) Numéro de dépôt: 02738268.8
(22) Date de dépôt: 17.05.2002
(51) Int. Cl.: B29C 33/56

(54) **INSERTS DE MOULAGE**
FORMEINSÄTZE
MOLD INSERTS

(30) Priorité: 31.05.2001 FR 0107168
(43) Date de publication de la demande: 17.03.2004
(73) Titulaire: ESSILOR INTERNATIONAL COMPAGNIE GENERALE D'OPTIQUE, 94227 Charenton cédex (FR)
(72) Inventeur: FERRACHAT, Marie-Paule, F-94100 Saint Maur des Fosses (FR); HANRIOT, Fabienne, F-75020 Paris (FR); MASSEE, Alain, F-55500 Longeaux (FR); COULON, Alain, F-82000 Montauban (FR)
(74) Mandataire: Hirsch & Associés
(86) Numéro de dépôt international: PCT/FR2002/001677
(87) Numéro de publication internationale: WO 2002/096613

(56) Documents cités:
- US-A- 5 112 025
- US-A- 5 662 999
- DATABASE WPI Section Ch, Week 200058 Derwent Publications Ltd., London, GB; Class A32, AN 2000-605201 XP002188717 & JP 2000 228037 A (TEIJIN LTD), 15 août 2000 (2000-08-15)

## Description

La présente invention concerne des inserts de moulage ainsi que leur procédé de fabrication. Elle concerne également des dispositifs de moulage de pièces optiques comprenant de tels inserts de moulage, en particulier pour le moulage par injection de lentilles ophtalmiques en polycarbonate.

Le moulage des lentilles est réalisé par injection de la matière dans une cavité qui est notamment constituée par deux inserts ayant respectivement la forme des surfaces avant et arrière de la lentille à mouler.

Ces inserts sont généralement en métal mais peuvent aussi être réalisés en verre. Le procédé de fabrication par injection soumet ces inserts à de très fortes contraintes mécaniques et thermiques. Or, les inserts doivent pouvoir subir un grand nombre de cycles pour assurer la rentabilité du procédé. Par ailleurs, ces inserts doivent pouvoir être nettoyés facilement, être inertes chimiquement, et résister aux agressions lors des manipulations sans se rayer. La réalisation de ces inserts est donc délicate de par le nombre de contraintes à prendre en compte.

En ce qui concerne la fabrication de lentilles unifocales asphériques, il est bien connu de réaliser les inserts de la façon suivante : Dans un premier temps, le bloc de métal, en général de l'acier, est usiné à la forme souhaitée au moyen d'une machine à commande numérique. Une fois usinée, la surface est polie. Cette surface est ensuite revêtue d'une couche de chrome afin d'augmenter la résistance à l'abrasion de l'insert et donc sa durée de vie. La couche déposée présente une épaisseur comprise entre 40 et 60 µm. La couche de chrome n'étant pas très régulière, la surface externe de la couche de chrome ne correspond plus exactement à la forme de la surface usinée. Il est alors nécessaire de polir la face externe de cette couche afin de retrouver la forme souhaitée. Si ce procédé est bien maîtrisé, il n'est reste pas moins qu'il est très coûteux.

Pour les inserts à surface progressive, le procédé est encore plus complexe car certaines surfaces progressives nécessitent un usinage en deux temps : dans une première étape, la surface est usinée et contrôlée au moyen d'un appareil spécifique permettant de mesurer les surfaces progressives. Une deuxième étape permet de corriger les défauts observés. Puis, on dépose une couche de chrome qui est ensuite polie, le tout en respectant les caractéristiques géométriques de la surface. Ce procédé qui inclut un repolissage est très long et coûteux.

Or afin de maîtriser, ou mieux, de diminuer les coûts de production de ces lentilles, il est important de réduire le coût de fabrication des inserts d'une part et d'augmenter leur durée de vie en nombre de cycles d'autre part.

Certaines solutions visant à simplifier ce procédé de fabrication d'inserts ont été proposées. Dans ce but, il a été proposé de déposer des couches de carbone d'une épaisseur régulière afin de s'affranchir de l'étape de repolissage.

Ainsi, le brevet US-A-4 948 627 décrit la fabrication de moules en SiC pour le moulage par compression à chaud d'éléments optiques de précision en verre. Le moule est revêtu d'une couche en carbone, destinée à faciliter le démoulage et comprenant des cristallites de diamant et de graphite ainsi que du carbone amorphe. La couche présente une épaisseur d'au plus 1 µm et une rugosité maximum inférieure à 20 nm. La couche est déposée par dépôt chimique en phase gazeuse (CVD) thermique ou assisté au plasma. La phase gazeuse comprend outre de l'hydrogène au moins 3% en mole de gaz organique. Cependant, les films contenant du graphite ou de l'hydrogène présentent une mauvaise tenue à la température. En effet, leur dureté et leur adhésion au moule diminuent considérablement après exposition à une température élevée.

Le brevet US-A-4 882 827 décrit des moules en SiC revêtus d'une couche de carbone « dur » résistant mieux à la température. Le carbone « dur » peut comprendre les phases diamant et graphite. La couche de carbone « dur » est déposée par pulvérisation cathodique en présence d'un gaz inerte tel que l'argon à une température comprise entre 250 et 450°C. L'épaisseur de la couche est de 0,5 à 20 nm. Il est indiqué que les couches déposées par CVD conduisent à des résultats médiocres. Ce type de procédé présente l'inconvénient de nécessiter le dépôt préalable d'une couche de β-SiC déposée par CVD afin de combler les pores du moule et d'améliorer l'état de la surface. Cette couche présente une épaisseur supérieure à 5 µm, typiquement de 500 µm. La complexité du procédé, une couche d'une telle épaisseur ne permet plus de respecter les caractéristiques géométriques de la surface du moule pour les pièces optiques de précision.

Par ailleurs, il s'avère que de telles couches en carbone adhèrent mal sur des inserts en métal. Afin d'améliorer l'adhérence, il a alors été proposé de déposer une couche intermédiaire.

Ainsi, le brevet US 5 872 613 décrit la réalisation d'une couche de DLC (acronyme anglais pour « diamond like carbon ») sur un moule en métal. Le DLC est caractérisé par un pic d'absorption en spectroscopie Raman à 1550cm⁻¹. La couche de DLC a une épaisseur comprise entre 0,1 et 100µm, de préférence entre 1 et 50µm. Afin d'améliorer l'adhésion de la couche DLC au moule métallique, une couche de molybdène est interposée entre le moule et la couche DLC. Le dépôt a lieu par évaporation par ionisation à une température inférieure à 600°C en présence d'un gaz de bombardement. Ce type de procédé nécessite le dépôt de deux couches de nature différente, ce qui ralentit la fabrication. De surcroît, le procédé fait intervenir deux techniques de dépôt différentes, ce qui le rend lourd et fastidieux.

Le brevet US 5 112 025 décrit le revêtement de moules plaqués de nickel pour la fabrication de disques compacts. La surface de ces disques compacts est plane et porte des motifs. L'insert utilisé pour réaliser de tels disques est en général recouvert de nickel facilitant le traçage de motifs. Les injections répétées de disques compacts usent et écrasent les motifs, dont il résulte une perte de caractéristiques géométriques. Par ailleurs, la matière injectée peut rester bloquée dans les motifs et provoquer des difficultés au démoulage. Le document propose alors de déposer une couche de protection en DLC sur le nickel afin de faciliter le démoulage. Cependant, la durabilité de ce type de revêtement « dur » déposé sur un substrat mou comme le nickel risque de ne pas convenir au procédé de moulage de pièces optiques, les inserts étant soumis à de fortes agressions lors des manipulations, ce qui n'est pas le cas des dispositifs de moulage de disques compacts.

Le brevet US 5 662 999 décrit un insert de moulage pour éléments optiques revêtu par un film de carbone ayant une épaisseur de 1 nm (0,001 micron) à 100 nm (0,1 micron).

Le problème qui se pose est alors celui de fournir un dispositif de moulage de pièces optiques ne présentant pas les inconvénients cités et notamment ayant une durée de vie améliorée et ne nécessitant pas de repolissage.

Selon l'invention, ce problème est résolu grâce à un insert de moulage dont la surface interne présente une rugosité quadratique moyenne Rq inférieure à 10 nm, lequel insert est revêtu d'une couche de protection présentant une dureté Vickers supérieure à 1000 HV, une épaisseur comprise entre 0,2 et 5 µm et dont la charge critique de l'adhérence est supérieure à 15 N.

De préférence, la couche de protection est en DLC.

Selon un mode de réalisation, l'insert portant la couche de protection est en acier ou en verre.

En particulier, l'insert peut porter des marquages.

De préférence, l'épaisseur de la couche de protection est comprise entre 2 et 5 µm.

Avantageusement, l'insert revêtu de la couche de protection présente une rugosité de surface moyenne inférieure à 7 nm. Selon un mode de réalisation préféré, la couche de protection présente une dureté Vickers supérieure à 1500 HV.

L'invention a également comme objet un dispositif de moulage d'une pièce optique comprenant un tel insert.

L'invention a en outre comme objet l'utilisation d'un tel dispositif pour la fabrication de lentilles ophtalmiques par moulage par injection. Selon un mode de réalisation, la lentille ophtalmique est une lentille progressive. Selon un autre mode de réalisation, la lentille ophtalmique moulée est en polycarbonate.

L'invention a enfin comme objet un procédé de fabrication d'un insert de moulage comprenant les étapes de :
- usinage et polissage d'un insert jusqu'à un Rq inférieur à 10 nm ;
- dépôt d'une couche de protection présentant une dureté Vickers supérieure à 1000 HV, une épaisseur comprise entre 0,2 et 5 µm et dont la charge critique de l'adhérence est supérieure à 15 N, de préférence par CVD.

En effet, la demanderesse a constaté qu'il était possible de déposer une couche de protection, par exemple en DLC, directement sur la surface d'inserts de surfaces complexes avec une adhésion suffisante pour résister aux pressions de moulage par injection si le substrat présente un paramètre de rugosité normalisé Rq (rugosité quadratique moyenne) inférieur à 10, de préférence 7 nm et une épaisseur comprise entre 0,2 et 5 µm. Une épaisseur supérieure à 2 µm de la couche en DLC contribue encore à améliorer ses propriétés d'anti-abrasion. Il est alors possible d'obtenir une telle couche de protection avec une épaisseur très régulière, ce qui permet de conserver les caractéristiques géométriques de la surface du moule et même de supprimer l'étape délicate de repolissage.

La surface ainsi revêtue d'un insert résiste mieux aux agressions, ce qui permet un rallongement considérable de sa durée de vie. Le procédé de fabrication de tels dispositifs est moins coûteux puisqu'il ne nécessite ni le dépôt d'une couche intermédiaire, ni le repolissage de la couche de protection.

En outre, on observe que contrairement aux inserts obtenus par dépôt de chrome par voie électrolytique, les marquages que portent certains inserts restent visibles après le dépôt de la couche de protection. Ce fait facilite la mise en oeuvre de ces inserts comportant des marquages, notamment destinés à la fabrication de lentilles ophtalmiques progressives.

L'invention est plus précisément décrite ci-après au moyen d'un mode de réalisation préféré.

Un insert en acier est usiné puis poli. L'état de la surface présente de préférence un Rq inférieur à 10 nm, et en particulier inférieur à 7 nm.

Sur cette surface est déposée directement une couche de protection. De préférence, il s'agit d'une couche de « diamond like carbon » (terme anglais signifiant « carbone de type diamant ». Le « diamond like carbon » peut être un A-DLC (« amorphous diamond like carbon », terme anglais signifiant « carbone de type diamant amorphe »), mais aussi un Me-DLC (« metal diamond like carbon », terme anglais signifiant « métal - carbone de type diamant»), tel que du WC-C, c'est-à-dire du DLC dans lequel ont été adjoints des composés métalliques tels que le tungstène). Le dépôt de TiN ou de TiCN est aussi envisageable.

Le dépôt est avantageusement réalisé par PACVD (acronyme anglais pour « plasma assisted chemical vapor deposition »). Un dépôt par CVD ou PVD est cependant également possible.

L'état de surface du substrat, donc de l'insert, est particulièrement important pour l'obtention d'une bonne adhérence de la couche de protection et pour garantir sa qualité optique. De préférence, la surface de l'insert présente une rugosité moyenne inférieure à 10 nm, en particulier inférieure à 7 nm.

L'homogénéité de l'épaisseur assure le respect des caractéristiques géométriques de l'insert sans nécessiter de repolissage. La couche présente de préférence une épaisseur comprise entre 0,2 à 5 µm. Lorsque l'épaisseur est inférieure à 0,2µm, elle n'assure plus une résistance à l'abrasion suffisante. Lorsque l'épaisseur est supérieure à 2 µm, on observe une adhérence améliorée. Lorsque l'épaisseur de la couche est supérieure à 5 µm, les caractéristiques géométriques de la surface et les marquages risquent de ne plus être respectés. La couche ainsi déposée présente une régularité d'épaisseur telle qu'elle n'a pas besoin d'être polie, ce qui permet de supprimer une étape chère et déformante. En outre, l'épaisseur déposée étant suffisamment faible, les caractéristiques géométriques de la surface sont bien respectées. Des mesures réalisées au moyen d'une machine à mesurer tridimensionnelle ont montré que la variation d'épaisseur de la couche ainsi déposée est de l'ordre de 0,1 µm, ce qui est très faible et convient pour la fabrication de lentilles ophtalmiques.

Ce procédé de fabrication permet l'obtention d'inserts de qualité, ce qui à son tour conditionne la qualité des lentilles obtenues par injection. Ce procédé ne nécessitant plus d'étape de repolissage permet d'aboutir à une baisse du coût de production des inserts. Enfin, en augmentant la durée de vie de ces inserts, un tel procédé permet également de baisser le coût de production des lentilles ophtalmiques obtenues.

Les couches ainsi déposées présentent des caractéristiques physico-chimiques suivantes. La dureté Vickers de la couche de protection est supérieure à 1000 HV et de préférence supérieure à 1200 HV.

De préférence, les matériaux utilisés assurent un faible coefficient de friction avec les matériaux de moulage. Ainsi, une couche de protection en DLC s'est avérée compatible avec l'injection de polycarbonate. La couche de protection est également de préférence chimiquement inerte.

L'état de surface après dépôt est de préférence également peu rugueux, par exemple caractérisé par une rugosité quadratique moyenne de surface Rq < 10 nm. On n'observe pas en général de défauts isolés de type cratères et rayures. Dans ces conditions, les couches présentent un bon comportement en adhérence. Typiquement, la charge critique de l'adhérence de la couche de protection est supérieure à 15 N. La charge critique Lc est la charge exprimée en Newton à partir de laquelle, dans un essai de type scratch test à force normale croissante imposée, il y a perte d'adhérence de la couche le long de la rayure. L'essai consiste à déplacer un échantillon sous une pointe diamant (indenteur Rockwell 200 micromètres de rayon appareil MST du CSEM). Lorsque l'on augmente la charge appliquée à la pointe de diamant, celle-ci s'enfonce progressivement dans la couche et produit une rayure de profondeur croissante. La valeur de la charge à laquelle on observe la séparation de la couche de son support est appelée la charge critique de l'adhérence.

La valeur choisie pour l'épaisseur de la couche de protection résout le problème que posent les marquages présents sur les inserts. En effet, les lentilles ophtalmiques progressives portent nécessairement des marquages, qui sont réalisés en négatif sur les inserts par exemple par gravure laser. Chaque marquage présente une profondeur d'environ 0,9 µm et une largeur d'environ 100 µm. Ces marquages peuvent donc être réalisés sur l'insert avant dépôt de la couche de protection avec l'assurance qu'ils seront préservés.

## Revendications

1. Insert de moulage dont la surface interne présente une rugosité quadratique moyenne Rq inférieure à 10 nm, lequel insert est revêtu d'une couche de protection présentant une dureté Vickers supérieure à 1000 HV, une épaisseur comprise entre 0,2 et 5 µm et dont la charge critique de l'adhérence est supérieure à 15 N.

2. Insert selon la revendication 1, dans lequel la couche de protection est en DLC.

3. Insert selon la revendication 1 ou 2, dans lequel l'insert portant la couche de protection est en acier ou en verre.

4. Insert selon l'une des revendications précédentes, dans lequel l'insert porte des marquages.

5. Insert selon l'une des revendications précédentes, dans lequel l'épaisseur de la couche de protection est comprise entre 2 et 5 µm.

6. Insert selon l'une des revendications précédentes, dans lequel l'insert revêtu de la couche de protection présente une rugosité de surface moyenne inférieure à 7 nm.

7. Insert selon l'une des revendications précédentes, dans lequel la couche de protection présente une dureté Vickers supérieure à 1500 HV.

8. Dispositif de moulage d'une pièce optique comprenant un insert selon l'une des revendications précédentes.

9. Utilisation du dispositif selon la revendication 8 pour la fabrication de lentilles ophtalmiques par moulage par injection.

10. Utilisation selon la revendication 9, dans laquelle la lentille ophtalmique est une lentille progressive.

11. Utilisation selon la revendication 9 ou 10, dans laquelle la lentille ophtalmique moulée est en polycarbonate.

12. Procédé de fabrication d'un insert de moulage comprenant les étapes de :
- usinage et polissage d'un insert jusqu' à un Rq inférieur à 10 nm ; et
- dépôt d'une couche de protection présentant une dureté Vickers supérieure à 1000 HV, une épaisseur comprise entre 0,2 et 5 µm et dont la charge critique de l'adhérence est supérieure à 15 N.

13. Procédé selon la revendication 12, dans lequel le dépôt de la couche de protection est réalisé par CVD.

## Claims

1. A molding insert, the internal surface of which has a mean square roughness Rₘₛ of less than 10 nm, which insert is coated with a protective coating having a Vickers hardness of greater than 1000 HV, a thickness of between 0.2 and 5 µm and the critical adhesion force of which is greater than 15 N.

2. The insert as claimed in claim 1, in which the protective coating is made of DLC.

3. The insert as claimed in claim 1 or 2, in which the insert bearing the protective coating is made of steel or glass.

4. The insert as claimed in one of the preceding claims, in which the insert bears markings.

5. The insert as claimed in one of the preceding claims, in which the thickness of the protective coating is between 2 and 5 µm.

6. The insert as claimed in one of the preceding claims, in which the insert coated with the protective coating has an average surface roughness of less than 7 nm.

7. The insert as claimed in one of the preceding claims, in which the protective coating has a Vickers hardness of greater than 1500 HV.

8. A device for molding an optical component comprising an insert as claimed in one of the preceding claims.

9. The use of the device as claimed in claim 8 for the manufacture of ophthalmic lenses by injection molding.

10. The use as claimed in claim 9, in which the ophthalmic lens is a progressive lens.

11. The use as claimed in claim 9 or 10, in which the molded ophthalmic lens is made of polycarbonate.

12. A process for manufacturing a molding insert, comprising the steps of:
- machining and polishing of an insert until an Rₘₛ of less than 10 nm is obtained; and
- deposition of a protective coating having a Vickers hardness of greater than 1000 HV, a thickness of between 0.2 and 5 µm and the critical adhesion force of which is greater than 15 N.

13. The process as claimed in claim 12, in which the protective coating is deposited by CVD.

## Patentansprüche

1. Formeinsatz, dessen innere Oberfläche eine mittlere quadratische Rauheit Rq kleiner als 10 nm aufweist, wobei der Formeinsatz mit einer Schutzschicht überzogen ist, die eine Vickers-Härte größer als 1000 HV, eine Stärke zwischen 0,2 und 0,5 µm aufweist und deren Bruchlast der Haftung größer als 15 N ist.

2. Formeinsatz nach Anspruch 1, bei dem die Schutzschicht aus DLC besteht.

3. Formeinsatz nach Anspruch 1 oder 2, bei dem der Formeinsatz, der die Schutzschicht trägt, aus Stahl oder aus Glas besteht.

4. Formeinsatz nach einem der vorhergehenden Ansprüche, bei dem der Formeinsatz Kennzeichnungen trägt.

5. Formeinsatz nach einem der vorhergehenden Ansprüche, bei dem die Stärke der Schutzschicht zwischen 2 und 5 µm liegt.

6. Formeinsatz nach einem der vorhergehenden Ansprüche, bei dem der mit der Schutzschicht überzogene Formeinsatz eine mittlere Oberflächenrauheit kleiner als 7 nm aufweist.

7. Formeinsatz nach einem der vorhergehenden Ansprüche, bei dem die Schutzschicht eine Vickers-Härte größer als 1500 HV aufweist.

8. Vorrichtung zum Formen eines optischen Teils, die einen Formeinsatz nach einem der vorhergehenden Ansprüche aufweist.

9. Einsatz der Vorrichtung nach Anspruch 8 zum Herstellen ophtalmischer Linsen durch Spritzguss.

10. Einsatz nach Anspruch 9, bei dem die ophtalmische Linse eine Progessivlinse ist.

11. Einsatz nach Anspruch 9 oder 10, bei dem die geformte ophtalmische Linse aus Polycarbonat besteht.

12. Verfahren zum Herstellen eines Formeinsatzes, das die folgenden Schritte aufweist:
- Bearbeiten und Polieren eines Formeinsatzes bis zu einer Rq kleiner als 10 nm, und
- Aufbringen einer Schutzschicht, die eine Vickers-Härte größer als 1000 HV, eine Stärke zwischen 0,2 und 5 µm aufweist, und deren Bruchlast der Haftung größer als 15 N ist.

13. Verfahren nach Anspruch 12, bei dem das Aufbringen der Schutzschicht durch CVD erfolgt.
